# EUROPEAN PATENT APPLICATION

(11) **EP 1 431 849 A2**
(43) Date of publication of application: **23.06.2004**
(21) Application number: 03257575.5
(22) Date of filing: 02.12.2003
(51) Int. Cl.: G05B 19/408

(54) **Numerical control apparatus**

(30) Priority: 04.12.2002 JP 2002352552
(71) Applicant: FANUC LTD, Minamitsuru-gun, Yamanashi 401-0597 (JP)
(72) Inventor: Chiba, Takuji, Oshino, Minamitsuru, Yamanashi 401-0511 (JP); Ogino, Hideo, Yamanashi 403-0005 (JP)
(74) Representative: Billington, Lawrence Emlyn

(57) **Abstract**

An indirect axis address command, "AX[controlled axis number] = commanded movement amount", which can designate a controlled axis to be commanded through a controlled axis number is used. The controlled axes number can be stored in a variable by "variable #100 = AXNUM [axis address]", for example. In this way, it is possible to cause different axes to carry out the same operations by the same programby changing the axis addresses stored in the variables. Because the controlled axis is designated by using the controlled axis number, operation can be performed.

## Description

### BACKGROUND OF THE INVENTION

### 1. Field of the Invention

The present invention relates to a numerical control apparatus and particularly to a numerical control apparatus having a plurality of controlled axes besides three basic axes X, Y, and Z which are controlled axes.

### 2. Description of the Related Art

Respective axes for driving a machine tool are given axis names such as X, Y, Z, U, V, W, A, B, and C. A numerical control apparatus for controlling this machine tool includes axis addresses as commands for controlling the respective axes. Normally, addresses similar to the axis names are used as these axis addresses. Correspondences between actual controlled axes, i.e., motors, and controlled axis numbers or between the controlled axis numbers and the axis addresses are stored by setting parameters or the like.

Although the numerical control apparatus internally brings the axis address into correspondence with the controlled axis number and then with the controlled axis by setting of the parameters or the like to determine the axis to actually be driven from a command program, only the command program using the axis addresses can be analyzed among command programs.

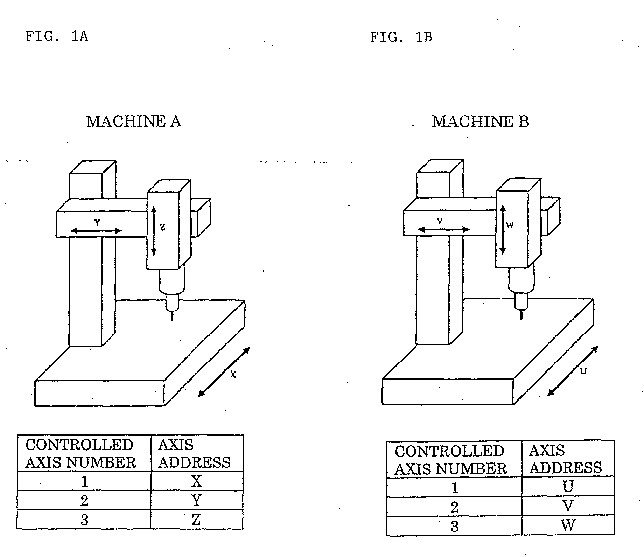

For example, in a machine A shown in FIG. 1A, an axis for moving a table or the like in a forward/backward direction when viewed from a front of the machine A is given an axis name, "X axis" and an axis address "X". An axis for moving it in a left/right direction is given an axis name, "Y axis" and an axis address, "Y". An axis for moving it in a vertical direction is given an axis name "Z axis" and an axis address, "Z".

In a machine B shown in FIG. 1B, an axis for moving a table or the like in a forward/backward direction when viewed from a front of the machine B is given an axis name, "U axis" and an axis address "U". An axis for moving it in a left/right direction is given an axis name, "V axis" and an axis address, "V". An axis for moving it in a vertical direction is given an axis name, "W axis" and an axis address, "W".

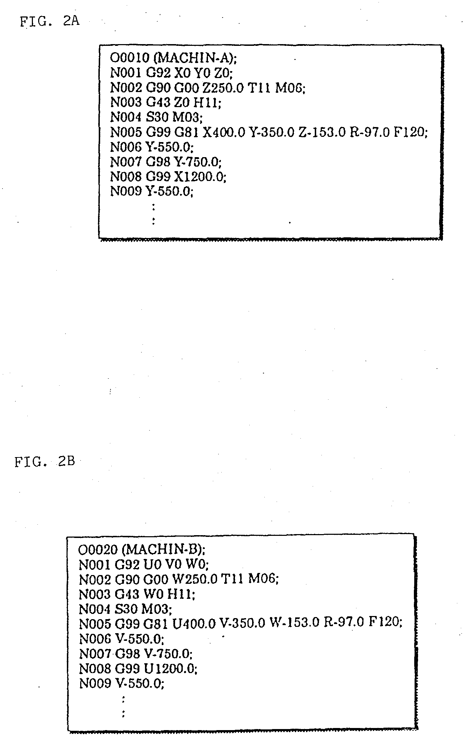

In order to cause the two machines A and B to carry out the same operations to produce the same shapes by machining, a command program using the axis addresses X, Y, and Z has to be written for the machine A as shown in FIG. 2A.

On the other hand, a command program using the axis addresses U, V, and W has to be written for the machine B as shown in FIG. 2B. The command programs in FIGS. 2A and 2B are different from each other only in that the axis addresses of the axes to be designated are X, Y, and Z in FIG. 2A but are U, V, and W in FIG. 2B. When the machines A and B operate by execution of the respective command programs, the machines A and B carry out the same operation to produce the same shapes in workpieces by machining.

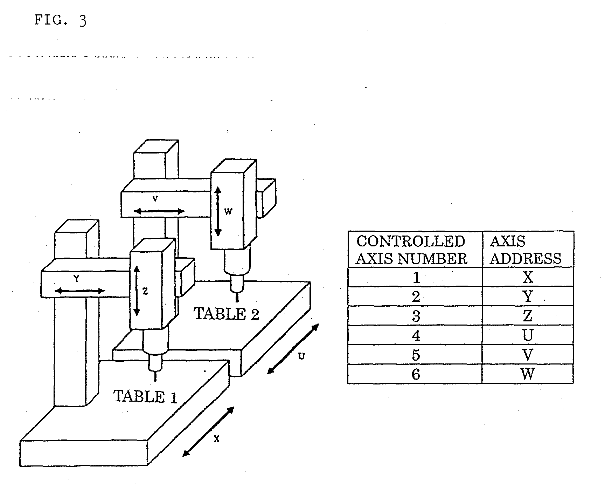

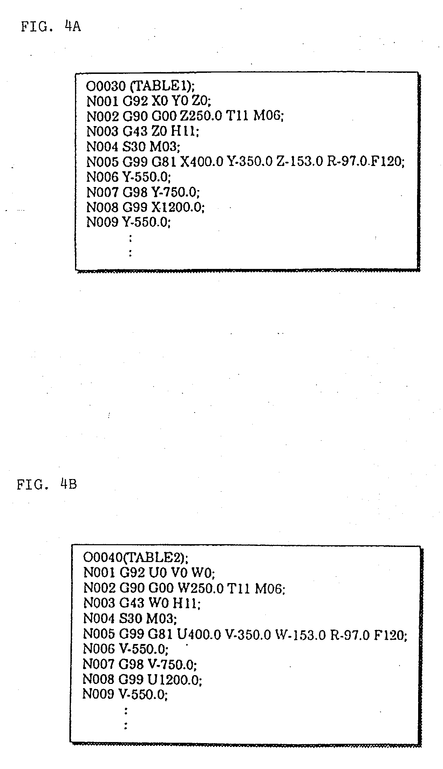

FIG. 3 shows an example of a machine having three basic axes X, Y, and Z and axes U, V, and W respectively parallel to the three basic axes. In order to drive the three basic axes and the parallel axes while synchronizing them with each other or to cause them to carry out the same operations independently of each other in this machine, two command programs for the three basic axes and for the parallel axes have to be written as shown in FIGS. 4A and 4B. The command programs shown in FIGS. 4A and 4B are different from each other only in that the axis addresses X, Y, and Z in FIG. 4A are replaced with the axis addresses U, V, and W in FIG. 4B.

As described above, in the example shown in FIGS. 1A and 1B, the machines have the same configurations of the axes but the axis addresses are different. Therefore, it is impossible to use the command program (FIG. 2A) written for the machine A for controlling the machine B. The command program as shown in FIG. 2B has to be written by changing the axis addresses.

Moreover, in the case of the machine shown in FIG. 3, the three basic axes X, Y, and Z and the parallel axes U, V, and W are caused to carry out the same operations but the axis addresses are different. Therefore, the command programs have to be written separately for the three basic axes X, Y, and Z and for the parallel axes U, V, and W as shown in FIGS. 4A and 4B.

As described above, because of the different axis addresses, the respective command programs have to be written even for carrying out the same operations and writing of the programs require time and efforts.

### SUMMARY OF THE INVENTION

A numerical control apparatus according to the present invention is capable of controlling a plurality of controlled axes.

The numerical control apparatus according to the first aspect of the present invention comprises: storage means for storing a command program describing movement amounts or positional information of controlled axes commanded in association with the axis numbers of the controlled axes; and program analyzing means for analyzing the command program to decode it into the movement amounts or positional information of the axes. And the plurality of axes are controlled according to the movement amounts or positional information analyzed by the program analyzing means.

The numerical control apparatus may further comprise variable storage means for storing controlled axis numbers to be designated and set by the command program so that the controlled axis numbers may be designated by using variables.

The numerical control apparatus according to the second aspect of the present invention comprises: storage means for storing correspondences between axis addresses designating the controlled axes and controlled axis numbers; and controlled axis number obtaining means for obtaining the controlled axis numbers from the axis addresses written in the command program, based on the correspondences stored in the storage means. And, the plurality of controlled axes are controlled based on the controlled axis numbers obtained from the controlled axis number obtaining means.

In the first and second aspects of the numeral control apparatus, the controlled axis numbers are designated by using operational expressions.

According to the present invention, by an indirect axis address command for designating the movement amount of the controlled axis by using the controlled axis number, it becomes possible to express the controlled axis numbers in terms of the variables and operational expressions. By changing the variables and the operational expressions, the command program can be changed easily. Therefore, the program can be shortened and simplified and general versatility of the command program can be fostered.

### BRIEF DESCRIPTION OF THE DRAWINGS

The above and other objects and features of the present invention will become apparent from the following description of the embodiment by reference to the accompanying drawings, in which:
FIGS. 1A and 1B are explanatory views of machines to which a numerical control apparatus according to the present invention is applied;
FIGS. 2A and 2B show examples of conventional command programs for the machines shown in FIGS. 1A and 1B;
FIG. 3 is an explanatory view of another machine to which the numerical control apparatus according to the present invention is applied;
FIGS. 4A and 4B show examples of conventional command programs for the machine shown in FIG. 3;
FIG. 5 is a functional block diagram of an essential portion of the numerical control apparatus according to an embodiment of the present invention;
FIG. 6 shows an example of a command program for controlling the machines shown in FIGS. 1A and 1B in the embodiment and replacing a conventional command programs shown in FIGS. 2A and 2B;
FIG. 7 shows an example of a command program for controlling the machine shown in FIG. 3 in the embodiment and replacing a conventional command programs shown in FIGS. 4A and 4B;
FIG. 8 shows an example of a prior-art command program for giving the same movement commands to respective controlled axes;
FIG. 9 shows an example of a command program in the embodiment and for giving the same movement commands as a conventional command program shown in FIG. 8;
FIGS. 10A to 10C show an example of a command program when the embodiment is applied to a case in which the same shape is applied to a different plane or the shape is rotated in machining; and
FIG. 11 is a processing flowchart of a movement command in the embodiment.

### DESCRIPTION OF THE EMBODIMENT

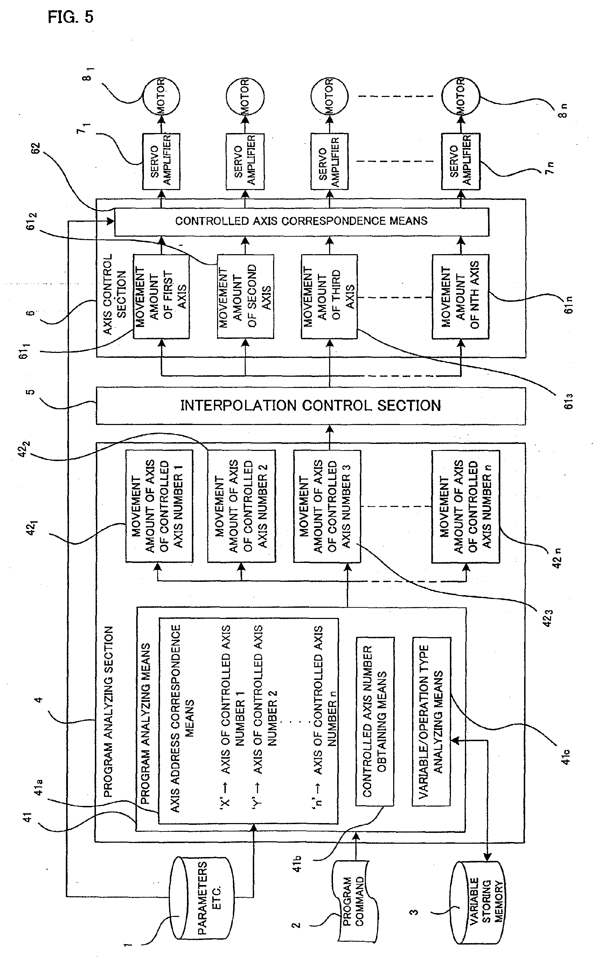

FIG. 5 is a functional block diagram of an essential portion of a numerical control apparatus according to an embodiment of the present invention.

Provided as program analyzing means 41 in a program analyzing section 4 of the numerical control apparatus are axis address correspondence means 41a for storing correspondences between axis addresses and controlled axis numbers set in a memory 1 by using parameters or the like, controlled axis number obtaining means 41b for obtaining controlled axis numbers from a command program 2, and variable/operation type analyzing means 41c for performing analysis based on variables'stored in the memory 3 and operational expressions designated by the command program 2.

Axis addresses using axis names are given to an axis for moving a table or the like in a forward/backward direction, an axis for moving it in a left/right direction, an axis for moving it in a vertical direction, and the like when viewed from a front of amachine, and the axis address correspondence means 41a stores correspondences between the axis addresses and the controlled axis numbers of the respective axes. In this embodiment, the correspondences between the axis addresses using the axis names given to the respective axes and the controlled axis numbers are set and stored by setting the parameters or the like.

The variable/operation type analyzing means 41c performs the operation designated by the command program to obtain the controlled axis number and the like. The controlled axis number obtaining means 41b obtains the controlled axis number from the axis address designated by the command program 2 and a result obtained by the variable/operation type analyzing means 41c and outputs a movement amount (42₁ to 42ₙ) corresponding to the controlled axis number.

An interpolation control section 5 performs interpolating processing for each predetermined interpolation cycle and outputs a movement amount (61₁ to 61ₙ) for each predetermined interpolation cycle to an axis control section of a designated controlled axis number. The axis control section 6 determines an axis to which the movement amount is actually output based on the controlled axis number by a controlled axis correspondence means 62 and drives a motor (8₁ to 8ₙ) of each the axis through a servo amplifier (7₁ to 7ₙ).

The above-described numerical control apparatus is different in structure from a conventional numerical control apparatus in that the numerical control apparatus includes the controlled axis number obtaining means 41b and the variable/operation type analyzing means 41c as the program analyzing means 41, but is similar to a conventional numerical control apparatus in other respects.

In the present embodiment, with the above-described structure, an indirect axis address designating method for designating the movement amount to the controlled axis by using the controlled axis number is used and it is possible to control the machine by designating the controlled axis number by the command program. For this purpose, commands for designating the controlled axes by using the controlled axis numbers are prepared in the present embodiment. In the embodiment, the command,
"AX [controlled axis number] ="
is provided and the controlled axis is designated by this command. For example, to form a command for moving a controlled axis number "1" by 123.456 as a program command, the command is
AX [1] = 123.456;

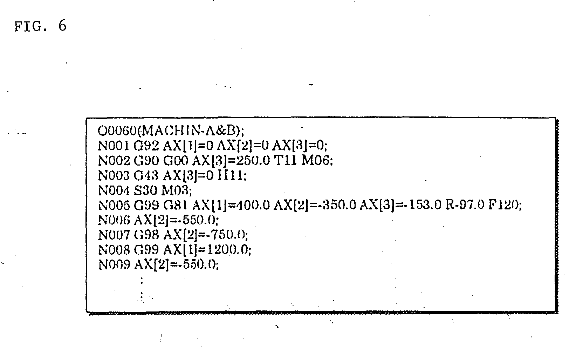

If a command program for carrying out the same operation as the command program shown in FIG. 2A for the machine A shown in FIG. 1A is written by using this command (indirect axis address command) according to the controlled axis number, the program shown in FIG. 6 is obtained. In this case, the axis address correspondence means 41a brings an axis address X into correspondence with a controlled axis number 1, an axis address Y with a controlled axis number 2, and an axis address Z with a controlled axis number 3. Comparing the programs shown in FIG. 6 with the program shown in FIG. 2A, it is seen that "X", "Y" and "Z" in the program shown in FIG. 2A is replaced with "AX[1]", "AX[2]" and "AX[3]", respectively, in the command program shown in FIG. 6.

On the other hand, in order to cause the machine B in FIG. 1B to carry out the same operation, the command program shown in FIG. 2B has to be written in prior art as described above. However, the command program shown in FIG. 6 will suffice in the present invention and there is no need to write a new program. In this case, an axis address U is to be brought into correspondence with the controlled axis number 1, an axis address V with the controlled axis number 2, and an axis address W with the controlled axis number 3 by the axis address correspondence means 41a.

Furthermore, the controlled axis numbers can be changed by using variables in the present invention. For this purpose, a command "AXNUM [axis address]" is provided. For example,
#100 = AXNUM [X]
is a command for assigning the controlled axis number of the axis address X to a variable #100. In order to cause the three basic axes X, Y, and Z and the parallel axes U, V, and W to carry out the same operations in the machine shown in FIG. 3 in prior art, the two command programs as shown in FIGS. 4A and 4B has to be written as described above. On the other hand, in the present invention, it is possible to easily write a command program by using this "AXNUM [axis address]" command.

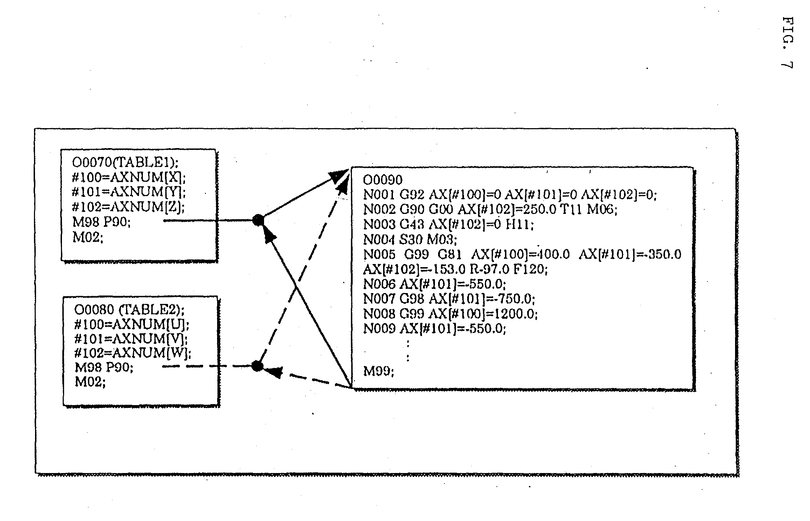

FIG. 7 shows an example of the command program for giving commands to the three basic axes X, Y, and Z and the parallel axes U, V, and W as in FIGS. 4A and 4B but written by using this "AXNUM [axis address]" command. In the machine shown in FIG. 3, a controlled axis number of an axis address X is brought into correspondence with "1", a controlled axis number of an axis address Y with "2", a controlled axis number of an axis address Z with "3", a controlled axis number of an axis address U with "4", a controlled axis number of an axis address V with "5", and a controlled axis number of an axis address W with "6".

First, by a command program, "'00070",

By the command #100 = AXNUM [X] , the controlled axis number "1" of the axis address X is assigned to the variable #100.

By a command #101 = AXNUM [Y], the controlled axis number "2" of the axis address Y is assigned to a variable #101.

By a command #102 = AXNUM [Z] , the controlled axis number "3" of the axis address Z is assigned to a variable #102.

Then, if a command program "00090" is executed, the machine carries out the same operation as that by the command program shown in FIG. 4A. In other words, differences between the command program shown in FIG. 4A and the command program "00090" are that "AX [#100]=", "AX[#101]=", and "AX[#102]=" are written in the command program, "00090", instead of "X", "Y", and "Z" in the command program shown in FIG. 4A. In this case, because the controlled axis number "1" of the axis address X is stored in #100, the controlled axis number "2" of the axis address Y is in #101, and the controlled axis number "3" of the axis address Z in #102 by the command program ""00070", the command program "00090" becomes the same as the command program shown in FIG. 4A.

Then, a command program, "00080" is executed and

By a command #100 = AXNUM [U] , the variable #100 is changed to the controlled axis number "4" of the axis address U.

By a command #101 = AXNUM [V] , the variable #101 is changed to the controlled axis number "5" of the axis address V.

By a command #102 = AXNUM [W], the variable #102 is changed to the controlled axis number "6" of the axis address W.

Then, if the command program, "00090" is executed,
AX [#100] = AX [4] = U,
AX [#101] = AX [5] = V, and
AX [#102] = AX [6] = W
in this command program and it becomes the command program for carrying out the same operation as the command program shown in FIG. 4B.

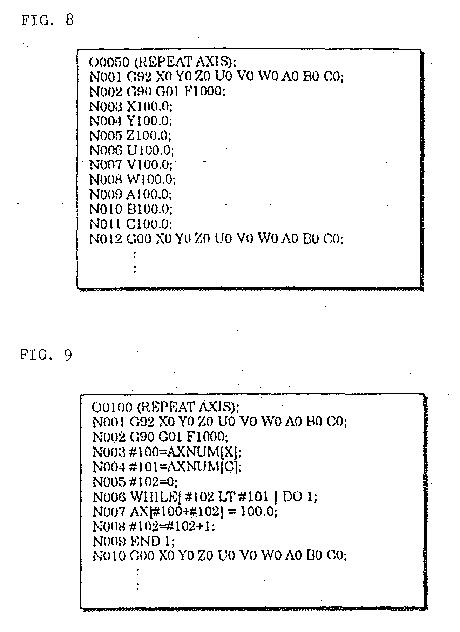

In the present invention, it is also possible to simplify the command program by performing various operations by using these variables. For example, in a machine tool of which driven axes are given axis names X, Y, Z, U, V, W, A, B, and C, a command program shown in FIG. 8 is a program for providing the same numeral to axis addresses X to C and carrying out cutting in turn. Such command program can be simplified by performing the operations by using the variables as shown in FIG. 9. In this case, controlled axis numbers 1, 2, 3, 4, 5, 6, 7, 8, and 9 are brought into correspondence with the axis addresses X, Y, Z, U, V, W, A, B, and C.

In this commandprogram, "WHILE [#102LT#101] DO1" in "N006" is a command instructing to repeatedly execute processing up to "END1" as long as a condition "#102<#101" is satisfied. Then, by "N003" to "N005", the controlled axis number "1" of the axis address X is stored in the variable #100, the controlled axis number "9" of the axis address C is stored in the variable #101, and "0" is stored in the variable #102.

First, at "N006", because "#102 = 0 < #101 = 9" and this is satisfied, AX [#100 + #102] = AX [1 + 0] = 100.0 in "N007" and a cutting movement command of "100.0" is given to the controlled axis number 1 (axis address X). Next, "1" is added to the variable #102 resulting in "1" in "N008". Because a conditional expression "#102 = 1 < #101 = 9" in "N006" holds, AX [#100 + #102] = AX [1 + 1] = 100.0 in "N007" and the cutting movement command of "100.0" is given to the controlled axis number 2 (axis address Y).

From then on, "1" is successively added to the variable #102 and the cutting movement command of "100.0" is given to the controlled axis numbers 3 to 9. Then, if the variable #102 becomes "9" and the conditional expression in "N006" does not hold ("#102 = 9 = #101 = 9") , the processing proceeds to "N010".

As described above, though the command program as shown in FIG. 8 has to be written to carry out the same operations in prior art, the program can be simplified in the present invention as shown in FIG. 9. Moreover, because the axes addresses are converted into numerals as the controlled axis numbers, the simple command program can be written by performing the various operations by using the numerals.

It is also possible to apply a program written as to a certain plane to another plane by using these variables. In other words, it is possible to make a program written as to an X-Y plane applicable to a Y-Z plane and Z-X plane. Moreover, it is possible to easily change a first program into a second program for machining a second shape to be obtained by rotating a first shape to be produced by a command of the first program.

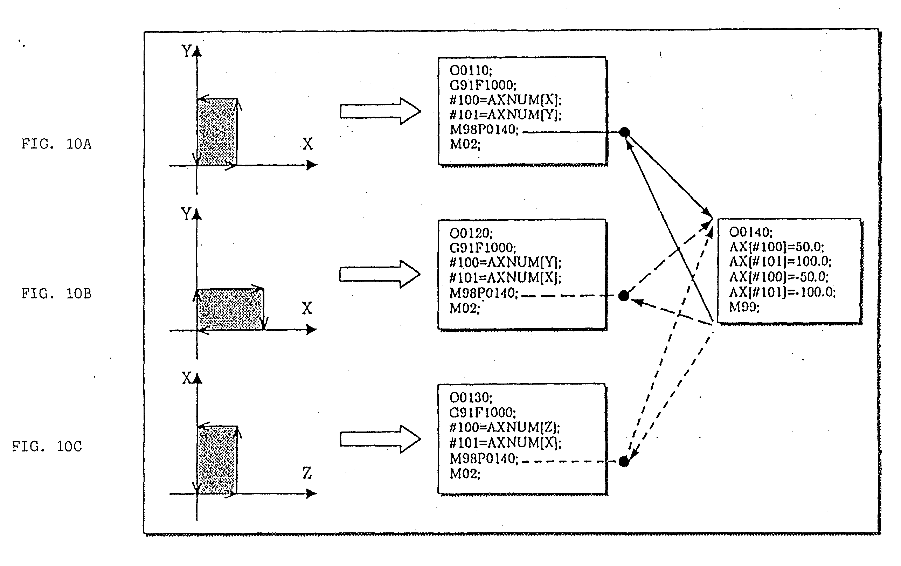

FIG. 10A shows a rectangular shape in the X-Y plane and FIG. 10B shows a shape obtained by rotating the rectangle by 90° on the X-Y plane. FIG. 10C shows an example in which the same rectangular shape is applied to the Z-X plane.

In FIG. 10A, by commands "#100 = AXNUM [X]" and "#101 = AXNUM [Y]" in a program "00110", the controlled axis number "1" of the axis address X is stored in the variable #100 and the controlled axis number "2" of the axis address Y is in the variable "101. Then, if a program, "00140" is executed, the program "00140" becomes
AX [#100] = AX [1] = 50.0
AX [#101] = AX [2] = 100.0
AX [#100] = AX [1] = -50.0
AX [#100] = AX [2] = -100.0
and, by executing this, after movement by "50.0" in a direction of the X axis, movement by "100.0" in a direction of the Y axis occurs and then movement by "-50.0" in the direction of the X axis and movement by "-100.0" in the direction of the Y axis occur to cause operation in the rectangular shape shown in a coordinate system in FIG. 10A.

On the other hand, in a case of FIG. 10B, "#100 = AXNUM [Y]"and"#101=AXNUM [X]"by a program, "00120"andthecontrolled axis number "2" of the axis address Y is stored in the variable #100 and the controlled axis number "1" of the axis address X is in the variable #101 by these commands. If the program, "00140" is executed, the program, "00140" becomes
AX [#100] = AX [2] = 50.0
AX [#101] = AX [1] = 100.0
AX [#100] = AX [2] = -50.0
AX [#100] = AX [1] = -100.0
and, by executing this, after movement by "50.0" in a direction of the Y axis, movement by "100.0" in a direction of the X axis occurs and then movement by "-50.0" in the direction of the Y axis and movement by "-100.0" in the direction of the X axis occur to cause operation in the rectangular shape shown in a coordinate system in FIG. 10B, i.e., to cause operation in the shape obtained by rotating the rectangular shape shown in FIG. 10A by 90°.

Furthermore, in order to apply the rectangular shape in FIG. 10A to the Z-X plane as shown in FIG. 10C, with "#100 = AXNUM [Z]" and "#101 = AXNUM [X] " commanded by a program "00130", the controlled axis number "3" of the axis address Z is stored in the variable #100 and the controlled axis number "1" of the axis address X is stored in the variable #101 by these commands. If the program "'00140" is executed, the program "00140" becomes
AX [#100] = AX [3] = 50.0
AX [#101] = AX [1] = 100.0
AX [#100] = AX [3] = -50.0
AX [#100] = AX [1] = -100.0
and, by executing this, after movement by "50.0" in a direction of the Z axis, movement by "100.0" in the direction of the X axis occurs and then movement by "-50.0" in the direction of the Z axis and movement by "-100.0" in the direction of the X axis occur to apply the same shape as the rectangular shape shown in FIG. 10A to the Z-X plane as shown in FIG. 10C.

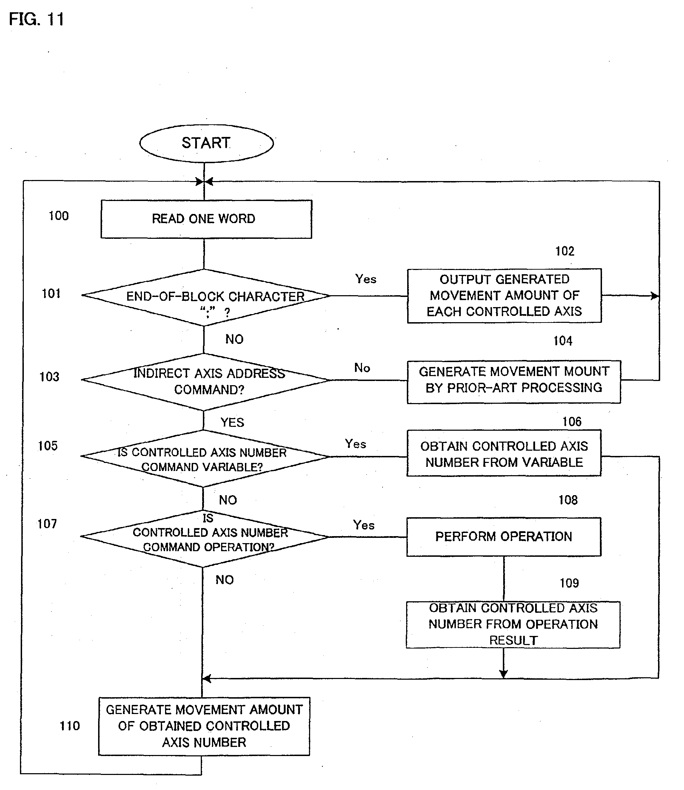

FIG. 11 is a flowchart of an essential part of processing performed by a processor of the numerical control apparatus of the embodiment.

First, one word is read from the command program (step 100) and whether it is an end-of-block character, ";" or not is judged (step 101). If it is the end-of-block character, a movement amount of each the controlled axis generated in one block is output (step 102).

Here, a word refers to a smallest unit of a command program which can be recognized as a command by the numerical control apparatus. Examples of one word are "X100.0", "G91", "AX [#100] = 200.0", ";", and the like. One block refers to a group of words surrounded by an end-of-block character and the next end-of-block character. After analyzing the command program by the block, the generated movement amount is output.

On the other hand, if the word is not the end-of-block character, whether it is an indirect axis address command or not is judged (step 103) . If it is not the indirect axis address command, the movement amount is obtained by prior-art processing (step 104) and the processor returns to step 100 to read the next word. From then on, if it is not the indirect axis address command, processing in steps 100 to 104 is repeatedly executed and an obtained movement amount is output when an end-of-block character is read in (step 102).

On the other hand, if the word is the indirect axis address command, whether a controlled axis number command is a variable or not is judged (step 105) . If it is a variable, the controlled axis number is obtained from the variable (step 106) to generate a movement amount of the obtained controlled axis number (step 110) . Then, the processing returns to step 100 to read the next one word. If the word is an indirect axis address command and the controlled axis number is not the variable, whether the controlled axis number command is operation or not is judged at step 107. If it is an operation, the operation is performed (step 108), the controlled axis number is obtained from a result of the operation (step 109) , the movement amount of the obtained controlled axis number is generated (step 110) , and the processor returns to step 100.

If the word is an indirect axis address command and the controlled axis number command is neither variable nor operation, i.e., if the indirect axis address command directly designates a controlled axis number, the processing proceeds from step 107 to step 110 to generate the movement amount of the controlled axis number.

By the above operational processing, it is possible to execute the above-described various forms of the program and writing of the command program is facilitated in the embodiment.

Although the axis address is designated to assign the controlled axis number to the variable in the above-described embodiment, it is also possible to directly store the controlled axis number in the variable. In this case, in order to assign the controlled axis number 1 to the variable #100, for example, "#100 = AXNUM[1]".

## Claims

1. A numerical control apparatus capable of controlling a plurality of controlled axes and comprising:
storage means for storing a command program describing movement amounts or positional information of controlled axes commanded in association with the axis numbers of the controlled axes; and
program analyzing means for analyzing the command program to decode it into the movement amounts or positional information of the axes;
wherein the plurality of axes are controlled according to the movement amounts or positional information analyzed by the program analyzing means.

2. The numerical control apparatus according to claim 1, further comprising variable storage means for storing controlled axis numbers to be designated and set by the command program, wherein the controlled axis numbers can be designatedby using variables.

3. A numerical control apparatus capable of controlling a plurality of controlled axes, comprising:
storage means for storing correspondences between axis addresses designating the controlled axes and controlled axis numbers; and
controlled axis number obtaining means for obtaining the controlled axis numbers from the axis addresses written in the command program, based on the correspondences stored in the storage means;
wherein the plurality of controlled axes are controlled based on the controlled axis numbers obtained from the controlled axis number obtaining means.

4. The numerical control apparatus according to claim 1 or 3, wherein the controlled axis numbers are designated by using operational expressions.
